# EUROPEAN PATENT APPLICATION

(11) **EP 1 018 630 A2**
(43) Date of publication of application: **12.07.2000**
(21) Application number: 00300032.0
(22) Date of filing: 06.01.2000
(51) Int. Cl.: G01B 5/14, F16C 35/07

(54) **Spacer gauging device for a roller bearing arrangement**

(30) Priority: 06.01.1999 GB 9900122
(71) Applicant: THE TIMKEN COMPANY, Canton, Ohio 44706-2798 (US)
(72) Inventor: Miller, Richard H., Nether Heyford, Northants NN7 3LJ (GB)
(74) Representative: Marles, Alan David

(57) **Abstract**

There is provided a gauging device 30 for determining the size of a spacer for a roller bearing arrangement mounted between a shaft 11 and a housing 12. The device 30 has an inner member 31, an outer member 40 which is axially movable relative to the inner member, and a plurality of balls 35. In use the balls 35 contact the shaft 11, the outer race 19 of a a second roller bearing and with a contact surface 44 of the outer member 40. The outer member 40 also provides a master roller engaging surface for receiving the rollers 20 and inner race 18 of the second bearing. Loading means is provided for applying a seating load to the inner race 18 and measuring means is provided for determining the axial distance between a contact face of the inner member and one of the axial end faces of the second inner race 18.

## Description

The present invention relates to gauging devices for bearing arrangements and more particularly for determining either the spacer required between the inner races of a pair of tapered roller bearings or the spacer/shim required between the end face of the shaft and an end plate in a tapered roller bearing arrangement. The spacers ensure that the roller bearings are correctly positioned and that they are subject to the correct loadings. Manufacturing and assembly tolerances of the bearing components can result in each bearing arrangement requiring a particular sized spacer.

According to the present invention there is provided a gauging device for determining the size of a spacer for a roller bearing arrangement comprising spaced first and second tapered roller bearings mounted between a shaft and a housing, the gauging device comprising an inner member adapted towards one end to contact a reference surface of the bearing arrangement and providing at its other end a contact face; an outer member which is axially movable relative to the inner member; a plurality of balls, each of which in use of the device being in contact with the shaft, with the outer race of the second roller bearing and with a contact surface of the outer member; the other end of said outer member providing a master roller engaging surface for receiving, in use of the device, the rollers and inner race of the second bearing; loading means for applying a seating load to the inner race of the second bearing; measuring means for determining the axial distance between the contact face of the inner member and one of the axial end faces of the second inner race.

Preferably the inner member is tubular at said one end. Conveniently said balls are provided in a plurality of respective holes in said tubular portion of said inner member and are capable of axial movement relative to said inner member and also said balls are retained relative to the inner member by means of a retaining frame secured to the inner member.

In preferred arrangements said outer member has a generally tubular portion at said one end and is disposed concentrically outward of the inner member with said contact surface in use in engagement with said balls. In some arrangements said contact surface may extend in a radial plane but in others it may be conical such that it tapers inwards or outwards in the axial direction away from the balls.

Normally said gauging device further comprises drive means for engagement with the shaft of the bearing arrangement so as to rotate the shaft. It is a preferred feature that the drive means is movable in the axial direction so that when it engages the shaft it moves the bearing arrangement away from a support arrangement. Said support may comprise pins on which the housing of the bearing arrangement sits.

Ideally the support arrangement further comprises a movable clamp arm which can be moved into engagement with the housing from the opposite direction to the engagement of the drive means with the shaft.

Another preferred feature is that the outer member is retained for rotation in a sub-slide which is movable in the axially relative to the bearing arrangement to make or break contact between the outer member and the balls. Another preferred feature is that the loading means includes a main slide which is movable axially relative to the sub-slide and which incorporates a loading platten for contact with the second inner race.

In some arrangements the loading platten is urged in use towards the second inner race by means of fluid pressure acting upon a diaphragm carried by the main slide and in addition the fluid pressure is created by a fluid reservoir located at a predetermined distance above the diaphragm.

Conveniently the main slide, sub slide and drive means are all slidably mounted on an axially extending rail attached to a support column. With certain embodiments the main slide is moved axially by an hydraulic cylinder and preferably the gauging device is arranged substantially vertically with the main slide uppermost.

With some embodiments the sub-slide is counterweighted relative to the main slide so that the balls are subjected to less force than the second inner race. Preferably the sub-slide is linked to the main slide by wires extending over pulleys attached to the main slide, counterweights being hung from the wires.

In some embodiments a contact member is mounted towards said other end of the inner member and is biased in use towards the adjacent front face of the second inner race, a measuring probe engaging said contact member to determine the axial position of said front face of the second inner race relative to said contact face of the inner member, said one end of which is in engagement with the front face of the first inner race, said front face constituting said reference surface.

In other embodiments a contact member is disposed between the loading platten and the rear face of the second inner face, a measuring probe engaging said contact member to determine the axial position of said rear face of the second inner race relative to said contact face of the inner member, said one end of which is in engagement with the axial end face of the shaft, said axial end face constituting said reference surface.

The present invention also provides a method of operating the above gauging device.

Embodiments of the present invention will now be described in more detail. The description makes reference to the accompanying drawings in which:
Figure 1 is a lengthwise section through a tapered roller bearing arrangement,
Figure 2 is a part sectional view through a gauging device according to the present invention for the figure 1 bearing prior to use,
Figure 3 is a lengthwise section through part of the gauging device show in figure 2,
Figure 4 is a part sectional view similar to figure 2 showing the gauging device in use,
Figures 5 to 7 are part sectional close up views of part of the gauging device showing positional relationships of various components,
Figure 8 is a lengthwise section through an alternative tapered roller bearing arrangement, and
Figure 9 is a lengthwise section through part of a modified gauging device according to the present invention for the figure 5 bearing prior to use.

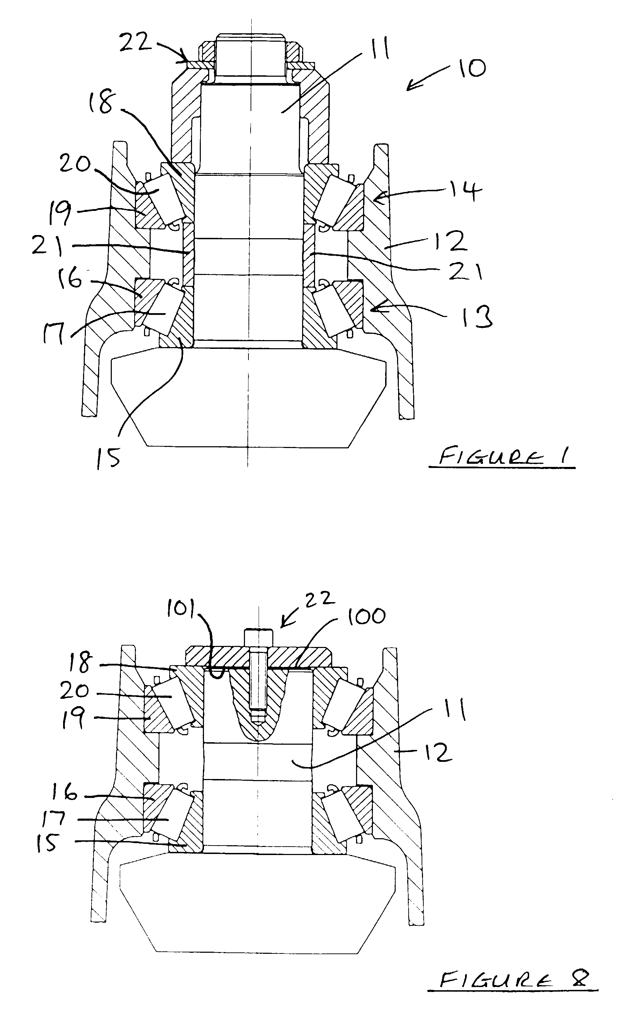

Figure 1 shows a bearing arrangement 10 comprising a shaft 11 mounted for rotation relative to a housing 12. First and second roller bearings 13, 14 are mounted between the shaft 11 and the housing 12. The first roller bearing 13 has an inner race 15, an outer race 16 and a series of rollers 17 therebetween. Similarly, the second bearing 14 has an inner race 18, an outer race 19 and a series of rollers 20 therebetween. An annular spacer 21 is provided between the two inner races 15, 18 in abutment with the "front" or inner faces of the two inner races 15, 18. Securing means 22 secures the two inner races with a predetermined seating force. It is important to choose a spacer 21 of a correct axial length in order to ensure that the bearings 13, 14 are seated properly under correct preload forces so that the bearing arrangement can perform as desired.

In some applications, the manufacturing tolerances of the components is such that each bearing arrangement has to be gauged to ensure that the correct length spacer is chosen for the particular bearing arrangement.

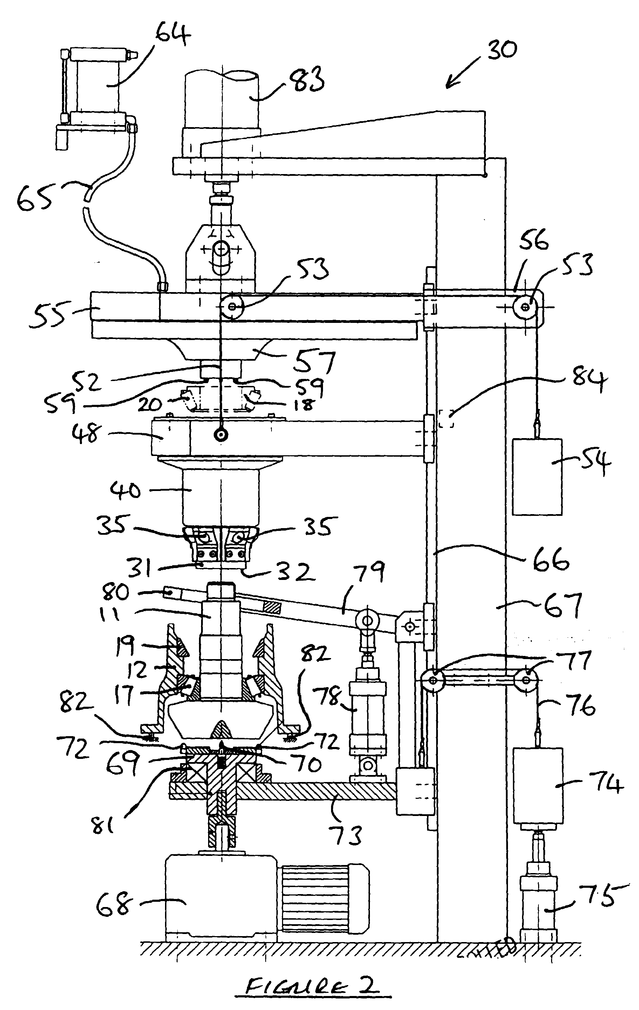

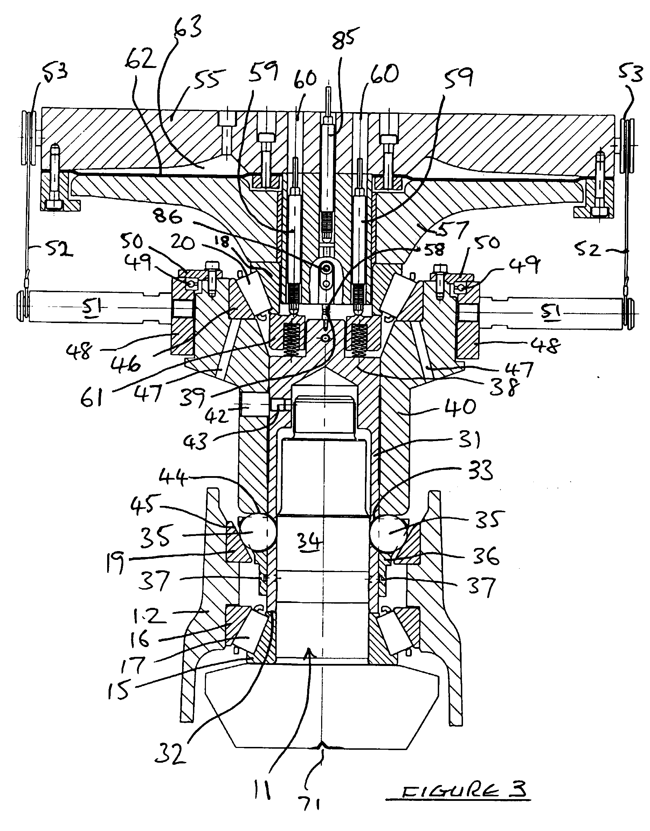

Figures 2 to 4 show a gauging device 30 for determining the correct spacer 21. The device 30 is to be used on a part-assembled bearing arrangement. The first races 15, 16 are mounted on the shaft 11 and in the housing 12 respectively with the usual interference fit and the first rollers 17 in their cage are disposed between the first races 15, 16. The second outer race 19 is also mounted in the housing 12 with an interference fit. During the gauging process the second rollers and inner race are disposed elsewhere and this will become clear in due course.

The device 30 comprises a generally cylindrical inner sleeve 31 which is adapted to pass over the shaft 11 until its first end face 32 contacts the front face of the first inner race 15. The sleeve 31 is provided with a series of holes 33, six in the present embodiment, at the general location of the shaft mounting surface 34 for the second inner race 18. A ball 35 is retained in each of these holes 33 for axial movement and rotation by a ball retaining frame 36 which is secured to the inner sleeve 31 with set screws 37. The inner sleeve 31 has a closed second end portion 38 which provides a contact point 39. The precise axial distance between the contact point 39 and the first end face 32 is known.

Surrounding the inner sleeve 31 is an outer sleeve 40 which is axially slidably relative to the inner sleeve 31 and they can be locked together by means of a retaining pin (not shown) extending into holes 42, 43 in the outer and inner sleeves 40, 31 respectively. The pin ensures that the inner and outer sleeves and the balls 35 remain together when the device 30 is inserted ready for use or withdrawn after use.

In use, the outer sleeve has a first end face 44 which sits on the upper surface of the balls 35 urging the balls into contact with the tapered surface 45 of the second outer race 19 and the mounting surface 34 on the shaft 11.

The second end of the outer sleeve 40 opposite the first end face 44 has a master outer race 46 mounted therein which master outer race 46 has known geometry. The second rollers 20 and second inner race 18 are mounted on this master outer race 46. Bores 47 provided in the outer sleeve 40 to enable the master race 46 to be removed when desired. The outer sleeve 40 is retained in a sub-slide 48 by small ball thrust bearings 49 and a retainer plate 50 such that the outer sleeve 40 can rotate relative to the sub-slide 48.

The sub-slide 48 is counterbalanced by a pair of oppositely extending support arms 51, wire ropes 52 extending from the arms 51 over pulleys 53 and a weight 54 attached to the wire ropes 52. The pulleys 53 are attached to a main slide 55 and its associated extension 56. The main slide 55 carries a movable loading platten 57 and also has a contact point 58 for engagement with the contact point 39 on the inner sleeve 31. Also provided in the main slide 55 are a pair of spring loaded measuring probes 59 which project downwardly from respective bores 60. The probes 59 in use contact a spring loaded face contact ring 61 which is mounted on the inner sleeve 31 and urged away therefrom so that in use it contacts the front face of the second inner race 18. The contact faces of the contact ring 61 for the inner race and for the probes 59 are in the same radially extending plane. In addition, a spring loaded probe 85 acting through an appropriate device measures the inner bore of the second inner race 18 with two or more radially projecting contacts 86.

The main slide 55 has a diaphragm 62 which defines a pressure chamber 63 which receives fluid from a hydraulic reservoir 64 via a flexible hose 65. Gravity causes the fluid to urge the diaphragm and thus the loading platten 57 away from the main slide 55. In use the loading platten 57 engages the "back" or axially outer face of the second inner race 18.

The main slide 55 and sub-slide 48 are mounted on a rail 66 attached to a main column 67 for movement in an axial direction. There is also provided a shaft drive comprising a motor 68 coupled to a drive plate 69 which carries a central guide pin 70 which engages a centre hole 71 in the shaft 11. The drive plate 69 is mounted on a drive frame 73 which is movable along the rail 66 by means of a counterweight 74 and cylinder 75 arrangement acting on a wire 76 and pulleys 77 combination.

An hydraulic ram 78 is also mounted on the drive frame 73 for moving a pivoted clamp arm 79 having a clamp plate 80 at its end remote from the pivot.

The drive plate 69 is mourned on a thrust bearing 81 and moves axially with the drive frame 73. Prior to use of the device the housing 12 of the bearing arrangement 10 sits on fixed locating pins 82. Also attached to the main column 67 is an hydraulic cylinder 83 for axially moving the main slide 55 and an abutment stop 84 for the sub-slide 48.

The gauging device 30 is used in the following manner. Firstly the shaft 11 and housing 12 complete with first roller bearing 13 and second outer race 19 are placed on the locating pins 82. The second set of rollers 20 and the second inner race 18 are placed on to the master outer race 46 in the outer sleeve 40.

The cylinder 75 is actuated so as to lower the counterweight 74 and thus raise the drive plate 69. The guide pin 70 engages the centre hole 71 in the shaft 11, the jaws 72 engage the gear teeth of the shaft and the shaft 11/housing combination is raised off the locating pins. The hydraulic cylinder 83 is then actuated to lower the main slide 55 into the sub-slide 48 with the loading platten 57 engaging the back face of the second inner race 18. The combined main slide 55 and the sub-slide 48 are lowered towards the shaft 11 with the shaft 11 entering the inner sleeve 31 and both the inner and outer sleeves 31, 40 extending past the clamp plate 80. The inner sleeve 31 will centre the top of the shaft 11 as the balls 35 come into contact with the second outer race 19 and the shaft mounting surface 34 for the second inner race 18. The first end face of the inner sleeve 31 also contacts the front face of the first inner race 15. The motor 68 is then started to seat the bearings.

After a short period of bearing seating time the hydraulic ram 78 is retracted so as to clamp the housing 11 with the clamp arm 79 and clamp plate 80 thereby providing a seating force for the first roller bearing 13. As the motor 68 continues to rotate the shaft 11, the relative positions of the two bearing inner races will be gauged with the measuring probes 59.

The second inner race 18, rollers 20 and the master outer race 46 are loaded in this embodiment by a combination of forces. The main forces are provided by gravity via the fluid reservoir 64 acting on the diaphragm 62 which in turn urges the loading platten 57 downwards on to the second inner race 18. In addition there is the weight of the main slide 55 acting through the second inner race 18. Without the arms 51, pulleys 53 and weight 54 arrangement all of the second bearing loading would pass through point contacts at the balls 35/second outer race 19 interface. Due to the usual magnitude of the loading forces this would normally be detrimental and could cause damage and wear at the balls 35/race interface 19. The counterweight therefore offsets some of the loading forces so that they do not act through the balls 35. Clearly the magnitudes of the forces used and the manner in which they are created are a matter of design choice for the particular bearings and their application.

With the bearings loaded, the motor 68 continues to rotate the shaft 11. This shaft rotation causes the balls 35 to rotate around the shaft 11 in a planetary fashion. The relative geometry shown in the figures means that if the shaft 11 rotates at 200 r.p.m. then the inner sleeve 31 will rotate at 50 r.p.m. This rotational speed is transmitted by the outer sleeve 40 to the master bearing 46 and second rollers 20. Also there will be relative motion between the two contact points 39, 58, and between the first end face 32 and the front face of the first inner race 15, thus keeping them free from contamination.

Turning to figures 5 to 7 (inner sleeve omitted for clarity) one aspect of how the gauging device 13 works will become apparent. At the ball 35 interface with the second outer race 19, outer sleeve 40 and shaft 11 there are tolerances in shaft 11 diameter and tolerances in outer race 19 diameter. In addition to manufacturing tolerances in the outer race 19, this component also shrinks by a very small degree due to its interference fit in the housing 12.

It will be apparent that in figure 5 two outer race 19 diameters are shown, one in broken lines, the differences in diameter of course being exaggerated. Clearly, if the outer race has the smaller diameter then the rollers 20 and second inner race 18 will not sit as close to the first inner race and so an axially longer spacer 21 will be needed.

This extra length is measured by the probes 59 because the balls 35 will urge the outer sleeve 40 to take up a higher position relative to the inner sleeve 31. This in turn results in the second outer race 19 being located in position relatively higher compared to the inner sleeve 31. The contact ring 61 follows the second outer race 19 thus causing movement of the probes 59 relative to the abutting contact points 39, 58. This relative movement accurately determines the correct spacer length.

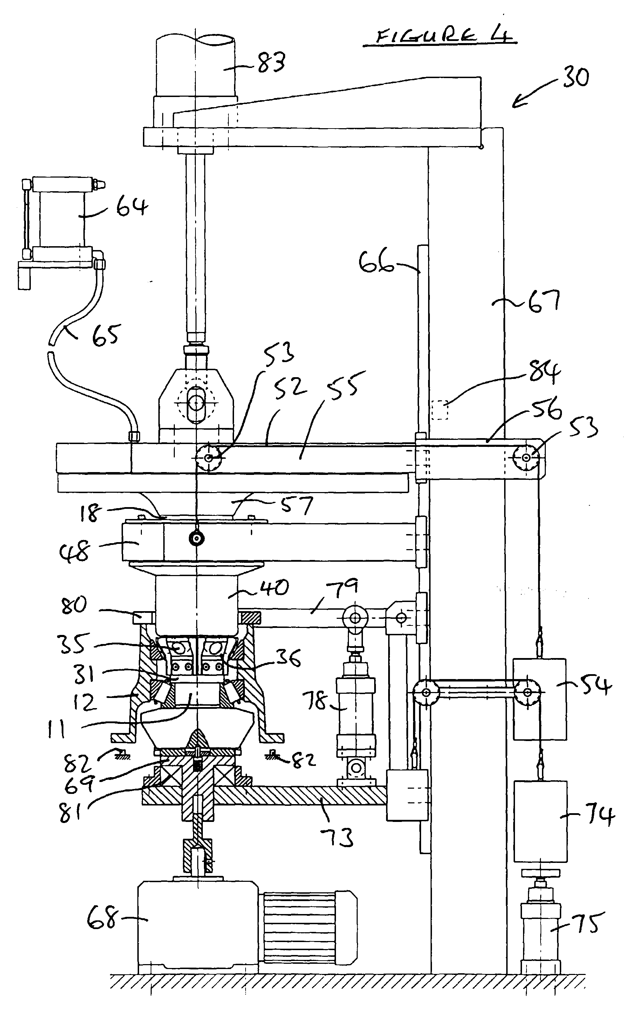

Similarly in figure 6, the relative movement of the balls 35 is shown, exaggerated again, for a slightly larger shaft 11 diameter. Again this will result in a higher position for the outer sleeve 40 relative to the inner sleeve 31 and thus movement of the probes 59 relative to the contact points 39, 58. Similarly a correct length of spacer will be determined.

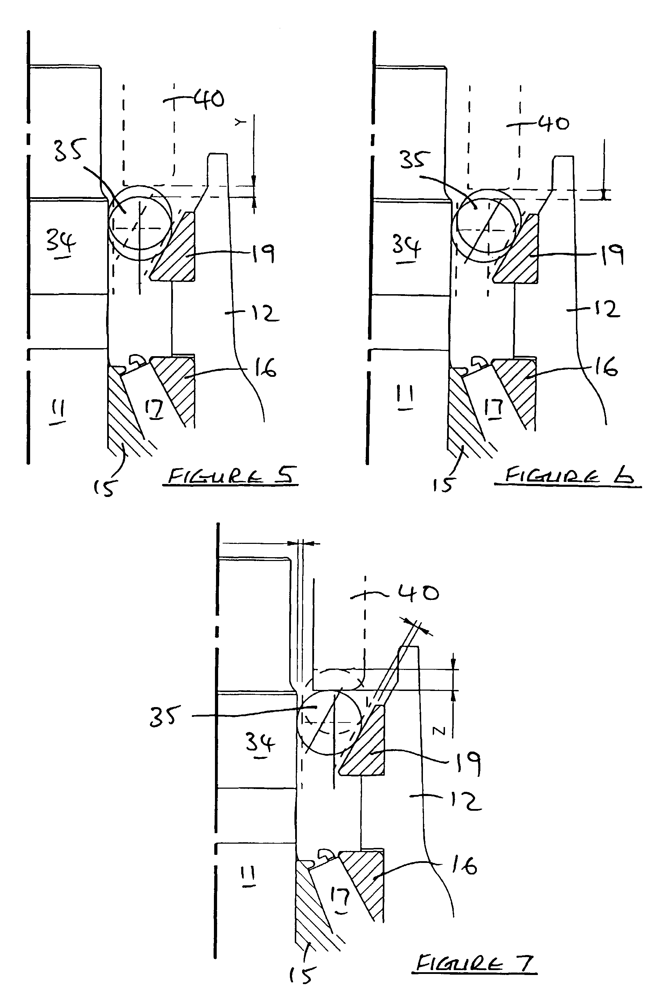

Figure 7 shows a combination of the figure 5 and figure 6 scenarios resulting in an even larger spacer for the arrangement having a slightly larger diameter shaft and a slightly smaller diameter outer race 19.

Once the probes 59 have taken the required measurements the hydraulic cylinder 83 is refracted so as to lift the main slide 55 and the sub-slide 48, until the sub-slide 48 reaches the abutment stop 84 at which point the main slide 55 continues to rise on its own. The cylinder 75 is extended so as to lower the drive plate 69 so that the housing 12 is returned to the locating pins 82 and the hydraulic ram 78 is then extended so that the clamp arm 79 is raised thereby freeing the bearing arrangement. With appropriate electronic calculations using the readings of the probe 59, the correct spacer 21 can be selected. The correct spacer can now be inserted into the housing 12 followed by the second rollers. The second inner race 19 can then be attached to the shaft 11 and the securing means 22 applied.

It will be understood that the gauging technique described above in connection with the device 30 can be readily modified to determine spacers or shims for other bearing arrangements. Another example is illustrated in figures 8 to 10.

Figure 8 shows a bearing arrangement similar in some respects to that shown in figure 1. However, in figure 8 the spacer 21 which abutted the "front" faces of both inner races 15, 18 has been replaced by a shim 100 which contacts the axial end face 101 of the shaft 11. The axial thickness of the shim determines the axial position of the second inner race 18.

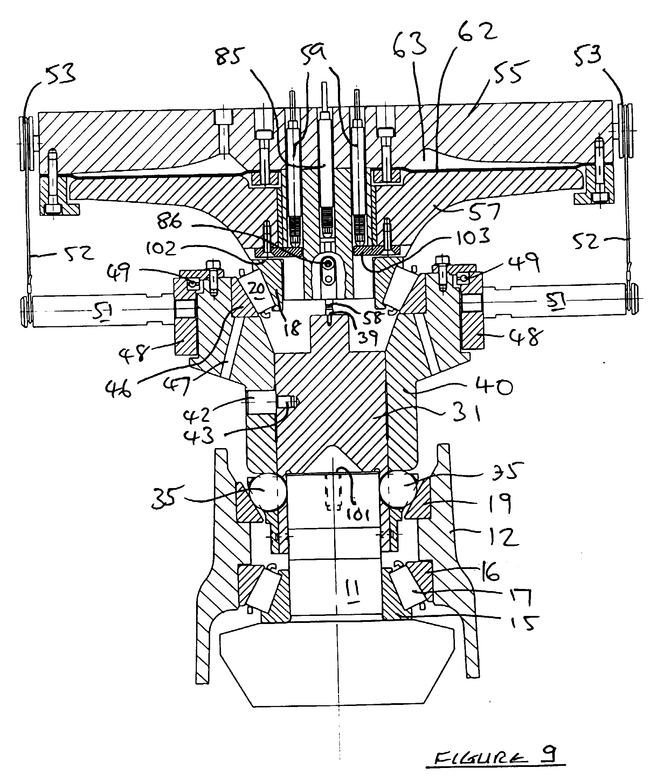

The gauging device 30 is simply modified as shown in figure 9 because the relative measurements determined by the probes 59 must now relate to the "rear" face 102 of the second inner race 18 and the other axial end face 101 of the shaft 11. The inner sleeve 31 now extends over the shaft 11 but now abuts the axial end face 101 of the shaft 11. Also the spring loaded contact ring 61 is replaced by a contact plate 103 secured to the loading platten 57 so as to engage the "rear" face 102 of the second inner race 18. The probes 59 engage the plate 103.

It will be understood by the skilled reader that changes in the position of the balls 35 will result in movement of the probes 59 relative to the contact points 39, 58. With appropriate electronic calculations using the readings of the probes 59, the correct shim 101 can be selected.

Whilst the end face 44 in the illustrations is shown as being radially planar, it is envisaged that the end face 44 may be part conical, tapering either outwardly or inwardly in an axial direction away from the balls. This can provide a correction factor relating to the differences in the size of the shaft. For example, if the shaft is hollow then when the inner race is press-fitted then it may go into the shaft. The angle of the conical taper of the end face 44 can be calculated so as to offset the influences of the press-fit.

Although the gauging devices described above have been shown in a vertical arrangement it is of course possible to employ the devices in other orientations such as an inverted arrangement provided the correct loads are still applied where required.

## Claims

1. A gauging device for determining the size of a spacer for a roller bearing arrangement comprising spaced first and second tapered roller bearings mounted between a shaft and a housing, the gauging device comprising an inner member adapted towards one end to contact a reference surface of the bearing arrangement and providing at its other end a contact face; an outer member which is axially movable relative to the inner member; a plurality of balls, each of which in use of the device being in contact with the shaft, with the outer race of the second roller bearing and with a contact surface of the outer member; the other end of said outer member providing a master roller engaging surface for receiving, in use of the device, the rollers and inner race of the second bearing; loading means for applying a seating load to the inner race of the second bearing; measuring means for determining the axial distance between the contact face of the inner member and one of the axial end faces of the second inner race.

2. A gauging device as claimed in claim 1 wherein the inner member is tabular at said one end.

3. A gauging device as claimed in claim 2 wherein said balls are provided in a plurality of respective holes in said tubular portion of said inner member and are capable of axial movement relative to said inner member.

4. A gauging device as claimed in any one of claims 1 to 3 wherein said balls are retained relative to the inner member by means of a retaining frame secured to the inner member.

5. A gauging device as claimed in any one of claims 1 to 4 wherein said outer member has a generally tubular portion at said one end and is disposed concentrically outward of the inner member with said contact surface in use in engagement with said balls.

6. A gauging device as claimed in claim 5 wherein said contact surface extend in a radial plane.

7. A gauging device as claimed in claim 5 wherein said contact surface is conical such that it tapers inwards or outwards in the axial direction away from the balls.

8. A gauging device as claimed in any one of claims 1 to 7 wherein said gauging device further comprises drive means for engagement with the shaft of the bearing arrangement so as to rotate the shaft.

9. A gauging device as claimed in claim 8 wherein the drive means is movable in the axial direction so that when it engages the shaft it moves the bearing arrangement away from a support arrangement.

10. A gauging device as claimed in claim 9 wherein said support comprise pins on which the housing of the bearing arrangement sits.

11. A gauging device as claimed in claim 10 wherein the support arrangement further comprises a movable clamp arm which can be moved into engagement with the housing from the opposite direction to the engagement of the drive means with the shaft.

12. A gauging device as claimed in any one of claims 1 to 11 wherein that the outer member is retained for rotation in a sub-slide which is movable in the axially relative to the bearing arrangement to make or break contact between the outer member and the balls.

13. A gauging device as claimed in claim 12 wherein the loading means includes a main slide which is movable axially relative to the sub-slide and which incorporates a loading platten for contact with the second inner race.

14. A gauging device as claimed in claim 13 wherein the loading platten is urged in use towards the second inner race by means of fluid pressure acting upon a diaphragm carried by the main slide.

15. A gauging device as claimed in claim 14 wherein the fluid pressure is created by a fluid reservoir located at a predetermined distance above the diaphragm.

16. A gauging device as claimed in any one of claims 13 to 15 wherein the main slide, sub slide and drive means are all slidably mounted on an axially extending rail attached to a support column.

17. A gauging device as claimed in claim 16 wherein the main slide is moved axially by an hydraulic cylinder and preferably the gauging device is arranged substantially vertically with the main slide uppermost.

18. A gauging device as claimed in any one of claims 12 to 17 wherein the sub-slide is counterweighted relative to the main slide so that the balls are subjected to less force than the second inner race.

19. A gauging device as claimed in claim 18 wherein the sub-slide is linked to the main slide by wires extending over pulleys attached to the main slide, counterweights being hung from the wires.

20. A gauging device as claimed in any one of claims 1 to 19 wherein a contact member is mounted towards said other end of the inner member and is biased in use towards the adjacent front face of the second inner race, a measuring probe engaging said contact member to determine the axial position of said front face of the second inner race relative to said contact face of the inner member, said one end of which is in engagement with the front face of the first inner race, said front face constituting said reference surface.

21. A gauging device as claimed in any one of claims 13 to 19 wherein a contact member is disposed between the loading platten and the rear face of the second inner face, a measuring probe engaging said contact member to determine the axial position of said rear face of the second inner race relative to said contact face of the inner member, said one end of which is in engagement with the axial end face of the shaft, said axial end face constituting said reference surface.

22. A method of operating the gauging device as claimed in any one of claims 1 to 22.
